(19) Europäisches Patentamt
European Patent Office
Office européen des brevets

(11) **EP 3 477 581 B1**

(12) **EUROPEAN PATENT SPECIFICATION**

(45) Date of publication and mention
of the grant of the patent:
**22.04.2020 Bulletin 2020/17**

(51) Int Cl.:
***G06T 3/40*** *(2006.01)*

(21) Application number: **18163189.6**

(22) Date of filing: **21.03.2018**

(54) **METHOD AND SYSTEM OF STITCHING FRAMES TO ASSIST DRIVER OF A VEHICLE**

VERFAHREN UND SYSTEM ZUM STITCHING VON EINZELBILDERN ZUR UNTERSTÜTZUNG DES FAHRERS EINES FAHRZEUGS

PROCÉDÉ ET SYSTÈME D'ASSEMBLAGE D'IMAGES POUR ASSISTER LE CONDUCTEUR D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2017 IN 201741038731**

(43) Date of publication of application:
**01.05.2019 Bulletin 2019/18**

(73) Proprietor: **Wipro Limited**
**560 035 Karnataka (IN)**

(72) Inventors:
• **DWIVEDI, Gyanesh**
**560076 Bangalore (IN)**

• **PATHANGAY, Vinod**
**560100 Bangalore (IN)**

(74) Representative: **Finnegan Europe LLP**
**1 London Bridge**
**London SE1 9BG (GB)**

(56) References cited:
**US-A1- 2017 178 372**

• **RICHARD SZELISKI: "Image Alignment and Stitching: A Tutorial", FOUNDATIONS AND TRENDS IN COMPUTER GRAPHICS AND VISION, vol. 2, no. 1, 1 January 2006 (2006-01-01) , pages 1-104, XP055400792, US ISSN: 1572-2740, DOI: 10.1561/0600000009**

**Description**

**TECHNICAL FIELD**

The present subject matter is related in general to the field of imaging systems, more particularly, but not exclusively, to a method and system of stitching frames to assist driver of a vehicle.

**BACKGROUND**

Today, with multiple cameras in automobiles becoming a reality, there are applications that require stitching of feeds from multiple cameras. Most of the existing stitching techniques use homography between two camera scenes, and use an assumption that the scenes are approximately planar, or the camera centres are co-incidental. However, this is not true for automotive cameras and the road scenes in which they are required to operate. Generally, for large vehicles such as trucks, buses and trailers, there is a need to safely move the vehicle in forward and reverse directions. In forward direction, the driver usually has clear visibility of the path ahead. But in reverse direction clear visibility is not possible, and the driver constantly needs to make a guess on direction and may rely on feedback from another person. With recent popularity of rear view cameras, driving safety has improved as the driver can see the path on a screen that shows what is behind the vehicle as captured using cameras.

In the existing systems, most cameras have a limited field of view which can be enhanced up to 180 degrees using fish eye lenses. But, the wide-angle cameras with fish eye lenses are hard to interpret as extremities appear smaller than the centre areas and need to be unwrapped or corrected. However, this still produces results that are not realistic, such as straight lines appearing to be bent. Also, another existing approach is to use multiple cameras with regular field of view (50° to 90°) and mosaic results to generate a consistent panorama image or video. However, the existing image stitching approach creates a problem in the resultant image, when there is a parallax between the cameras, causing some parts of the scene to appear twice.

The information disclosed in this background of the disclosure section is only for enhancement of understanding of the general background of the invention and should not be taken as an acknowledgement or any form of suggestion that this information forms the prior art already known to a person skilled in the art.

US2017/178372A1 relates to a system and a method that determines a seam between pairs of adjacent images for panoramic image stitching.

"Image Alignment and Stitching: A Tutorial", FOUNDATIONS AND TRENDS IN COMPUTER GRAPHICS AND VISION, vol. 2, no. 1, 1 (2006-01-01), by RICHARD SZELISKI discloses about the basic motion models underlying alignment and stitching algorithms, describes effective direct (pixel-based) and feature-based alignment algorithms, and describes blending algorithms used to produce seamless mosaics.

**SUMMARY**

In an embodiment, the present disclosure may relate to a method of stitching frames to assist driver of a vehicle. The method may comprise receiving a plurality of frames from a plurality of image sensors, configured in a vehicle. The method may comprise identifying, one or more objects and corresponding pixel coordinates, in the plurality of frames. The method may comprise determining, one or more set of mapped objects based on correspondence between the one or more objects, in each of the plurality of frames. The correspondence is determined based on the pixel coordinates of the one or more objects. The method comprises determining a visibility status for each object in each set of the mapped objects, based on pre-defined visibility conditions. The method may further comprise identifying, a priority index for each object in each set of the mapped objects, based on the visibility conditions and corresponding object parameters. In an embodiment, the object parameters may comprise object size, relative object ratio, object type and proximity of the one or more objects to the plurality of image sensors. The method may further comprise generating a resultant image by stitching the plurality of frames, considering an object from each set of the mapped objects having highest priority index. The resultant image is displayed to assist the driver of the vehicle.

In an embodiment, the present disclosure may relate to a driver assistance system for stitching frames to assist driver of a vehicle. The driver assistance system may comprise a processor and a memory communicatively coupled to the processor, where the memory stores processor executable instructions, which, on execution, may cause driver assistance system to receive a plurality of frames from a plurality of image sensors, configured in a vehicle. The driver assistance system may identify one or more objects and corresponding pixel coordinates, in the plurality of frames. The driver assistance system may determine one or more set of mapped objects based on correspondence between the one or more objects, in each of the plurality of frames. The correspondence is determined based on the pixel coordinates of the one or more objects. The driver assistance system may determine a visibility status for each object in each set of the mapped objects, based on pre-defined visibility conditions. The driver assistance system may further identify a priority index for each object in each set of the mapped objects, based on the visibility status and corresponding object parameters. In an embodiment, the object parameters may comprise object size, relative object ratio, object type and proximity of the one or more objects to the plurality of image sensors. The driver assistance system may further generate a resultant image by stitching the plurality of frames, considering an object from each set of the mapped objects having highest priority index. The resultant image is displayed to assist the driver of the vehicle.

In an embodiment, the present disclosure relates to a non-transitory computer readable medium including instructions stored thereon that when processed by at least one processor may cause a driver assistance system to receive a plurality of frames from a plurality of image sensors, configured in a vehicle. The instructions may cause the processor to identify one or more objects and corresponding pixel coordinates, in the plurality of frames. The instructions may cause the processor to determine one or more set of mapped objects based on correspondence between the one or more objects, in each of the plurality of frames. The correspondence is determined based on the pixel coordinates of the one or more objects. The instructions may cause the processor to determine a visibility status for each object in each set of the mapped objects, based on pre-defined visibility conditions. The instructions may cause the processor to further identify a priority index for each object in each set of the mapped objects, based on the visibility status and corresponding object parameters. In an embodiment, the object parameters may comprise object size, relative object ratio, object type and proximity of the one or more objects to the plurality of image sensors. The instructions may cause the processor to further generate a resultant image by stitching the plurality of frames, considering an object from each set of the mapped objects having highest priority index. The resultant image is displayed to assist the driver of the vehicle.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig.1 illustrates an exemplary environment for stitching frames to assist driver of a vehicle in accordance with some embodiments of the present disclosure;

Fig.2 shows a detailed block diagram of a driver assistance system in accordance with some embodiments of the present disclosure;

Fig.3 illustrates a flowchart showing a method for stitching frames to assist driver of a vehicle in accordance with some embodiments of present disclosure;

Fig.4a shows an exemplary representation of a display unit of a vehicle displaying a stitched image to assist driver of the vehicle in accordance with some embodiments of the present disclosure;

Fig.4b, Fig.4c and Fig.4d shows an exemplary representation of frames for generating resultant image in accordance with some embodiments of present disclosure; and

Fig.5 illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present disclosure relates to a method and a driver assistance system for stitching frames to assist driver of a vehicle. In an embodiment, the vehicle may refer to any motor vehicle used for transportation. The vehicle may be configured with image sensors. The image sensors configured in the vehicle may capture a plurality of frames, whenever a user moves the vehicle in a reverse direction. The plurality of frames may be received by the driver assistance system of the vehicle. The driver assistance system may determine one or more objects and corresponding pixel coordinates in the plurality of frames. A pixel coordinate matching may be performed to determine one or more set of mapped objects. For each of the one or more mapped object, a visibility status and a priority index may be determined. A resultant image may be generated by stitching the plurality of frames, after considering an object from each set of the mapped objects having a highest priority index. The resultant image may be displayed in the vehicle to assist driver of the vehicle. The present disclosure may stitch frames which is parallax free to assist driver of the vehicle.

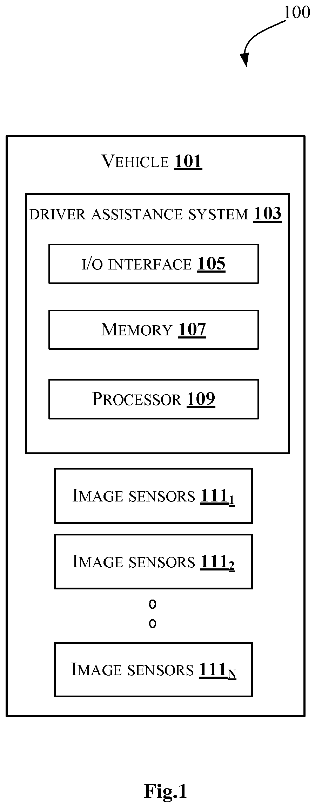

**Fig.1** illustrates an exemplary environment for stitching frames to assist driver of a vehicle in accordance with some embodiments of the present disclosure.

As shown in Fig.1, a vehicle 101 consists of a driver assistance system 103, an image sensor $111_1$, an image sensor $111_2$, ... , and an image sensor $111_N$ (collectively referred as plurality of image sensors 111). In an embodiment, the vehicle 101 may refer to any motor vehicle which may be used for transporting such as, cars, buses, trucks and the like. In an embodiment, the driver assistance system 103 may be connected to the vehicle 101 through a communication network (not shown in fig.1). In an embodiment, the communication network may include, but is not limited to, a direct interconnection, a Peer to Peer (P2P) network, Local Area Network (LAN), Wide Area Network (WAN), wireless network (e.g., using Wireless Application Protocol), Internet, Wi-Fi and the like. In an embodiment, the plurality of image sensors 111 may include sensors which may capture images such as, digital cameras, reversing cameras and the like. A person skilled in the art would understand that any other imaging device, not mentioned explicitly, may also be used in the present disclosure. The driver assistance system 103 may stitch frames to assist driver of the vehicle 101.

Initially, when a driver of the vehicle 101 moves the vehicle in a reverse direction, the plurality of image sensors 111 may capture a plurality of frames of rear view of the vehicle 101. The plurality of frames may be received by the driver assistance system 103. In an embodiment, the plurality of frames may be captured with a pre-defined overlapping value and at a pre-defined rate from each of the plurality of image sensors 111. For example, the pre-defined overlapping value may be 20%. The pre-defined rate may be, for example, 5 to 30 frames per second. The driver assistance system 103 may identify one or more objects and corresponding pixel coordinates of each of the objects in the plurality of frames. In an embodiment, the one or more objects may refer to an entity such as, surrounding vehicles, physical entities like pillars, poles, animals and the like, present in the plurality of frames, which may be required to be known to the driver while driving the vehicle 101. In an embodiment, the one or more objects may be identified based on a pre-trained object recognition classifier. In an embodiment, the pre-trained object recognition classifier may be used to detect objects and localize them on each of the plurality of frames. In an embodiment, the pre-trained object recognition classifier consists of a deep neural network which may be trained for classifying objects in the plurality of frames into different object types such as, vehicles, person, tree, animal, building and the like. Further, the pixel coordinates of each of the one or more objects may be identified by generating bounding boxes for each object present in the plurality of frames. The driver assistance system 103 may determine one or more set of mapped objects based on correspondence between the one or more objects, in each of the plurality of frames. In an embodiment, the correspondence between the one or more objects may be defined as one-to-one mapping of the pixel coordinates between the plurality of frames. In an embodiment, the correspondence between each object may be determined using a feature point matching technique. A person skilled in the art would understand that any other technique, not mentioned explicitly, may also be used for feature mapping in the present disclosure. The feature point matching technique may involve determining a set of points in the plurality of frames, such that they point to a same physical point on object in the real world. For example, if a first object is present in two or more frames of the plurality of frames, then the first object is marked visible in all the corresponding frames. The driver assistance system 103 may determine a visibility status for each object in each set of the mapped objects, based on pre-defined visibility conditions, once the one or more set of object correspondence is determined. In an embodiment, the visibility status for each object in each set of the mapped objects may comprise a relative object position of each object in one frame of the plurality of frames with respect to another frame of the plurality of frames. In an embodiment, the pre-defined visibility status may comprise at least one of presence, partial presence and absence of the one or more objects, the driver assistance system 103 may identify a priority index for each object in each set of the mapped objects based on the visibility status and object parameters. In an embodiment, the object parameters comprise object size, relative object ratio, object type and proximity of the one or more objects to the plurality of image sensors 111. In an embodiment, the object size and the relative object ratio may be determined based on the pixel coordinates of the corresponding object. Further, the driver assistance system 103 may generate a resultant image by stitching the plurality of frames, considering an object from each set of the mapped objects having highest priority index. In an embodiment, the resultant image may be displayed to assist the driver of the vehicle 101. In an embodiment, the driver assistance system 103 eliminates discontinuity in the plurality of stitched frames using an image smoothening filter. The present disclosure may assist driver of the vehicle 101 by providing a resultant image, free from parallax. In an embodiment, parallax may refer to an effect where position, and direction of an object, viewed from different angles, appears to differ from actual position and direction of the object. The parallax free resultant image may help in a safe reversing of the vehicle 101 by the driver.

The driver assistance system 103 may include an I/O Interface 105, a memory 107 and a processor 109. The I/O interface 105 may be configured to receive the plurality of frames from the plurality of image sensors 111. The I/O interface 105 may provide the resultant image to the vehicle 101.

The information received from the I/O interface 105 may be stored in the memory 107. The memory 107 may be communicatively coupled to the processor 109 of the driver assistance system 103. The memory 107 may also store processor instructions which may cause the processor 109 to execute the instructions for stitching frames to assist driver of the vehicle 101.

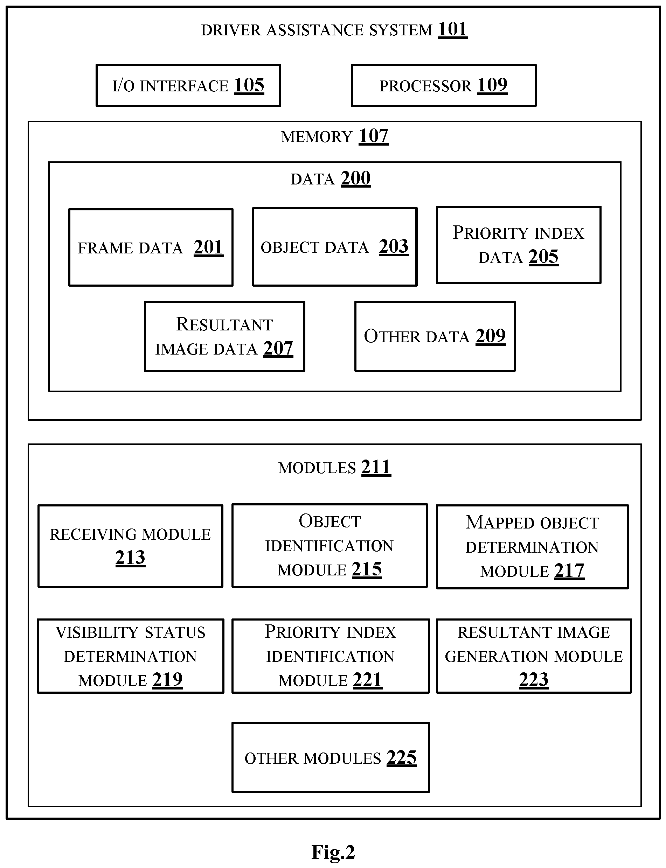

**Fig.2** shows a detailed block diagram of a driver assistance system in accordance with some embodiments of the present disclosure.

Data 200 and one or more modules 211 of the driver assistance system 103 are described herein in detail. In an embodiment, the data 200 may include frame data 201, object data 203, priority index data 205, resultant image data 207 and other data 209.

The frame data 201 may include details regarding the plurality of frames received from the plurality of image sensors 111. The details may include information regarding the plurality of image sensors 111 from which each frame may be received. The frame data 201 may include details regarding the overlapping value and the pre-defined rate at which the plurality of frames is received.

The object data 203 may include details associated with the one or more objects identified in the plurality of frames. The details may include the type of object identified. In an embodiment, the one or more objects may include other vehicles, surrounding trees, pedestrians, animals and the like. A person skilled in the art would understand that any other object, not mentioned explicitly, may also be included in the present disclosure. The object data 203 may also include details regarding the pixel coordinates of each of the one or more objects, in the plurality of frames. In an embodiment, details regarding the pixel coordinates may include bounding box details for each object detected in the plurality of frames. Further, the object data 203 may include the one or more set of the mapped objects and details regarding the visibility status for each object in each set of the mapped objects.

The priority index data 205 may include details regarding the priority index identified for each object in each set of the mapped objects. In an embodiment, the priority index data 205 may include an order of priority index in which the one or more objects appear in the resultant stitched image. In an exemplary embodiment, the priority index data 205 may include a list of objects with descending order of priority index.

The resultant image data 207 may include details regarding an image which may be generated by stitching the plurality of frames. The resultant image data 207 may include the priority index of the object which may be considered while stitching the plurality of frames.

The other data 209 may store data, including temporary data and temporary files, generated by modules 211 for performing the various functions of the driver assistance system 103.

In an embodiment, the data 200 in the memory 107 are processed by the one or more modules 211 of the driver assistance system 103. As used herein, the term module refers to an application specific integrated circuit (ASIC), an electronic circuit, a field-programmable gate arrays (FPGA), Programmable System-on-Chip (PSoC), a combinational logic circuit, and/or other suitable components that provide the described functionality. The said modules 211 when configured with the functionality defined in the present disclosure will result in a novel hardware.

In one implementation, the one or more modules 211 may include, but are not limited to a receiving module 213, an object identification module 215, a mapped object determination module 217, a visibility status determination module 219, a priority index identification module 221 and a resultant image generation module 223. The one or more modules 211 may also include other modules 225 to perform various miscellaneous functionalities of the driver assistance system 103. In an embodiment, the other modules 225 may include a discontinuity elimination module. The discontinuity elimination module may eliminate discontinuity in the plurality of stitched frames.

The receiving module 213 may receive the plurality of frames from the plurality of image sensors 111, configured in the vehicle 101. In an embodiment, the plurality of frames may be received at the pre-defined rate and at the pre-defined overlapping value. In an embodiment, one frame from each of the plurality of image sensors 111 may be captured such that, there is no significant difference between timestamps of the capture of each frame.

The object identification module 215 may identify the one or more objects in the plurality of frames. In an embodiment, the one or more objects may be identified using the pre-trained object recognition classifier which may be trained using different object types. The pre-trained object recognition classifier consists of the deep neural network which may be trained for classifying objects in the plurality of frames into different object types. In an embodiment, the different object types may include for example, vehicles, pedestrian, tree, building and the like. Further, the object identification module 215 may identify the pixel coordinates associated with the one or more objects. In an embodiment, the pixel coordinates may be identified by generating bounding boxes of each of the one or more object present in the plurality of frames. In an embodiment, the bounding box may be top-left and bottom-right pixel coordinates, denoting extremities of the object located in the plurality of frames.

The mapped object determination module 217 may determine the one or more set of mapped objects based on the correspondence between the one or more objects. In an embodiment, correspondence is defined as a set of points on one or more frames taken from the plurality of image sensors 111 that denote the same point in physical world or scene. The mapped object determination module 217 may determine a location of a given real world object in the plurality of frames captured from the plurality of image sensors 111. The mapped object determination module 217 may determine the correspondence between the one or more objects by mapping the pixel coordinates of the one or more objects. In an embodiment, the correspondence between each object may be determined using the feature point matching technique. The feature point matching technique may involve determining the set of points in the plurality of frames, such that, they point to the same physical point on the object in the real world. For example, if the first object is present in two or more frames of the plurality of frames, then the first object is marked visible in all the corresponding frames. In an embodiment, the feature point matches may be represented as point-correspondences for a set of frames and helps in determining object visibility. For example, if there is a person wearing a yellow dress in the scene visible to only two out of ten image sensors 111, then the correspondence for the object is a mapping of pixels in frames of the first and second image sensor in which person with yellow dress is present.

The visibility status determination module 219 may determine the visibility status of each object in the plurality of frames. The visibility status determination module 219 may determine the visibility status based on pre-defined visibility conditions. In an embodiment, the visibility status for each object in each set of the mapped objects comprises a relative object position of each object in one frame of the plurality of frames with respect to another frame of the plurality of frames. In an embodiment, the pre-defined visibility status comprises at least one of presence, partial presence and absence of the one or more objects.

The priority index identification module 221 may identify the priority index associated with each object in each set of the mapped objects, in the plurality of frames. The priority index identification module 221 may identify the priority index based on the visibility status and corresponding object parameters. In an embodiment, the object parameters may include, but is not limited to, object size, relative object ratio, object type and proximity of the one or more objects to the plurality of image sensors. The priority index identification module 221 may identify the object parameters for each of the objects. In an embodiment, the object size is an area of the bounding box of the object detected. The priority index identification module 221 may identify the relative object ratio based on the below equation 1.

$$\text{Relative object aspect ratio} = r/R \qquad (1)$$

Where, R = is the maximum aspect ratio of a particular object type.

Aspect ratio r = width / height of the bounding box of the object detected.

Further, the object type is identified such as, the vehicle, pedestrian or any other object that may be of interest in the operating environment. In an embodiment, an index number is associated with the type such that higher the priority of the object, higher the value of object. The priority index identification module 221 identifies the priority index, once the object parameters are identified, based on the below equation 2.

$$OPI = s \times \frac{r}{R} \times t \qquad\qquad (2)$$

Where, s = object size

r/R= relative object ratio

t = object type value.

The resultant image generation module 223 may generate the resultant image by stitching the plurality of frames. The resultant image generating module 223 may generate the resultant image by considering an object from each set of the mapped objects having highest priority index. In an embodiment, the resultant image may be generated when a given reference frame is augmented using another frame which is looking at an extended region of the scene. In an embodiment, the resultant image generation module 223 may eliminate discontinuity in the plurality of stitched frames using an image smoothening filter. The resultant image may be displayed on the vehicle 101 to assist the driver of the vehicle 101.

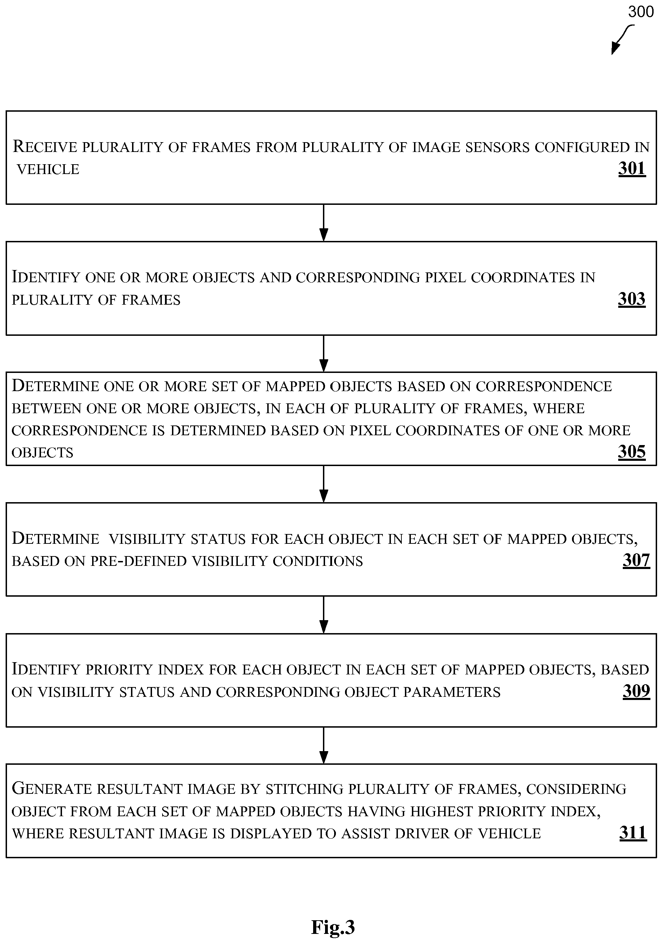

**Fig.3** illustrates a flowchart showing a method for stitching frames to assist driver of a vehicle in accordance with some embodiments of present disclosure.

As illustrated in Fig.3, the method 300 includes one or more blocks for stitching frames to assist driver of a vehicle 101. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the spirit and scope of the subject matter described herein. Furthermore, the method can be implemented in any suitable hardware, software, firmware, or combination thereof.

At block 301, a plurality of frames is received by the receiving module 213, from the plurality of image sensors, configured in the vehicle 101.

At block 303, one or more objects and corresponding pixel coordinates are identified by the object identification module 215, in the plurality of frames.

At block 305, one or more set of mapped objects based on correspondence between the one or more objects is determined by the mapped object determination module 217, in each of the plurality of frames. In an embodiment, the correspondence is determined based on the pixel coordinates of the one or more objects.

At block 307, the visibility status for each object in each set of the mapped objects is determined by the visibility status determination module 219, based on the pre-defined visibility conditions.

At block 309, the priority index for each object in each set of the mapped objects is identified by the priority index identification module 221. The priority index is identified based on the visibility status and corresponding object parameters.

At block 311, the resultant image may be generated by the resultant image generation module 223, by stitching the plurality of frames. The plurality of frames may be stitched by considering the object from each set of the mapped objects having the highest priority index. The resultant image is displayed to assist the driver of the vehicle 101.

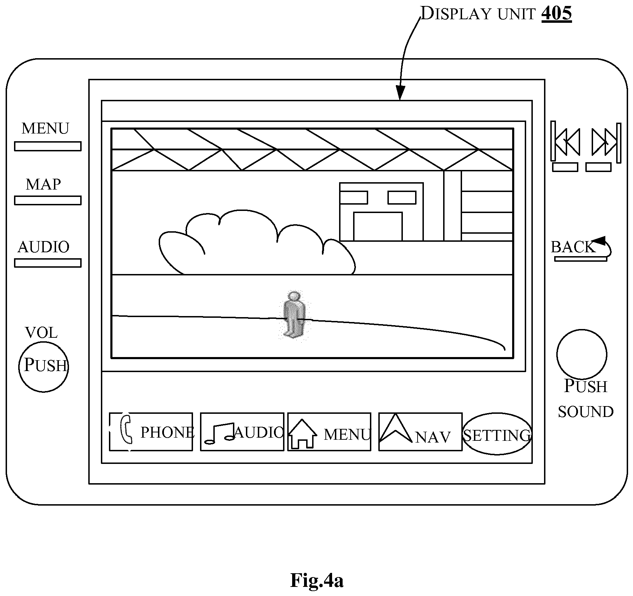

**Fig.4a** shows an exemplary representation of a display unit of a vehicle displaying a stitched image to assist driver of the vehicle in accordance with some embodiments of the present disclosure.

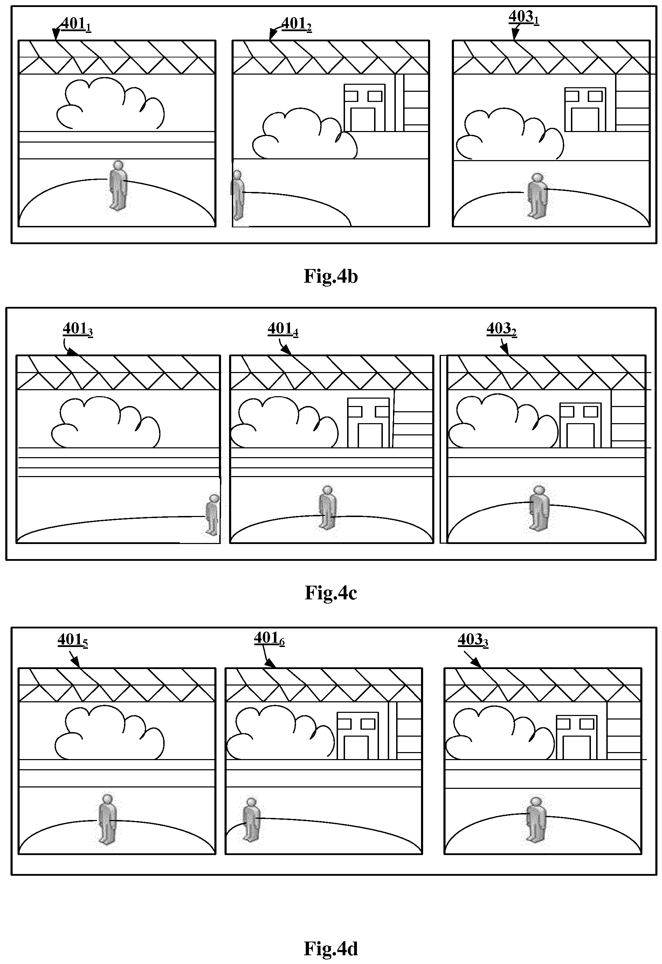

Fig.4a shows an exemplary navigation display of a vehicle, i.e., a car, which displays the resultant image to assist the driver of the car. The car is configured with the plurality of image sensors 111 at the rear side of the car (not shown in fig.4). While moving on a road, the driver of the car takes the car in a reverse direction. On moving to reverse gear, the plurality of image sensors 111 configured in the rear side of the car captures the plurality of frames of the rear view of the car. The rear view of the car includes a person moving towards the car, a tree and a building on right side. The plurality of image sensors 111 may capture the plurality of frames at the pre-defined rate and with the pre-defined overlapping value. Consider a first scenario, where the car comprises two image sensors. The two image sensors capture one frame each as shown in fig.4b. Fig.4b, comprises two frames of the rear view of the car, namely, frame $401_1$ and frame $401_2$. As shown in fig.4b, the frame $401_1$ comprises a person visible completely and a tree in the background. The frame $401_2$ comprises the same person who is partially visible along with same tree and a building. The tree in the frame $401_2$ appears closer than the building. The two frames $401_1$ and frame $401_2$ are received by the driver assistance system 103 of the car. The driver assistance system 103 on receiving the two frames, identifies the person, the tree and the building as the objects. Further, the driver assistance system 103 may identify the pixel coordinates associated with the person, the tree and the building in the frames. The driver assistance system 103 may determine the one or more set of mapped objects based on the correspondence between the one or more objects in the two frames, once the objects are identified. The visibility status of each object, i.e. the moving person, tree and the building are determined. As shown in fig.4b, the moving person is visible completely in frame $401_1$ and partial in the frame $401_2$. Further, the driver assistance system 103 identifies the priority index of the moving person, the tree and the building based on the corresponding visibility status and parameters associated with the moving person, the tree and the building. For example, the parameters may include the size, the relative object ratio, the object type and the proximity of the one or more objects to the image sensors. Based on the object parameters, the moving person is identified to comprise a first highest priority index. The proximity of the tree to the car is more than the building, hence the tree comprises a second highest proximity index and the building comprises a third highest priority index. Further, based on the priority index, the driver assistance system 103 generates a resultant image $403_1$ by stitching the frame $401_1$ and frame $401_2$ such that, the person, the tree and the building are visible in the resultant frame $403_1$ as shown in fig.4b. In an embodiment, the objects may be overlaid while stitching the resultant image, such that, higher priority objects overlap lower priority objects in the order of priority index.

Similarly, consider a second and a third scenario as shown in fig.4c and fig.4d respectively. Fig.4c comprises two frames $401_3$ and frame $401_4$. The frame $401_3$ comprise the person who is partial visible along with the tree in the background. The frame $401_4$ comprises the same person who is visible completely along with the tree and the building in the background. The frame $401_3$ and the frame $401_4$ are stitched such that the person, the tree and the building are visible in a resultant frame $403_2$ based on the priority index. Further, Fig.4d comprises two frames, frame $401_5$ and a frame $401_6$. The frame $401_5$ comprise a person who is completely visible along with the tree in the background. The frame $401_6$ comprises the same person who is also visible completely along with the tree and the building in the background. The frame $401_5$ and the frame $401_6$ are stitched such that the person, the tree and the building are visible in a resultant frame $403_3$ based on the priority index. The resultant image $403_1$ of fig.4b is displayed on a display unit 405 of the car as shown in fig.4a to assist the driver of the car. Similarly, the resultant image $403_2$ and resultant image $403_3$ of fig.4c and fig.4d respectively, may be displayed in the corresponding scenario in the display unit 405 of the car.

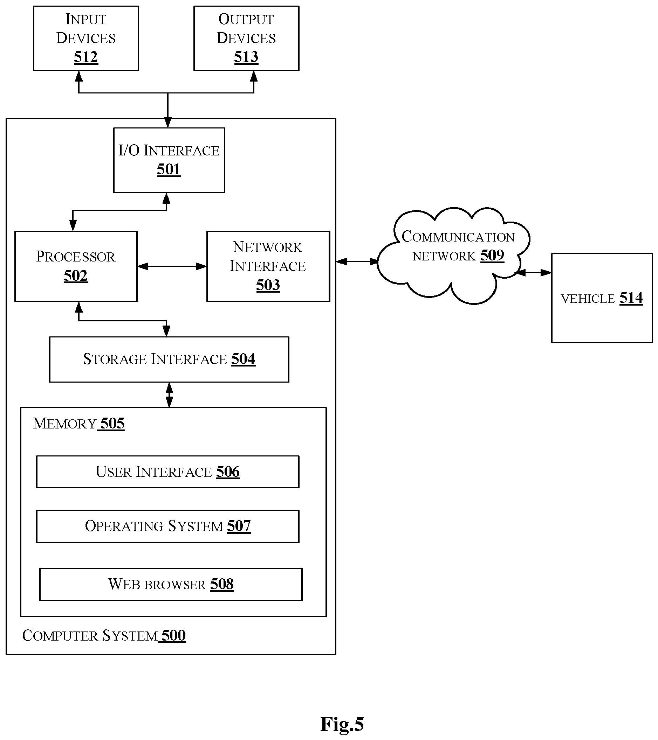

**Figure 5** illustrates a block diagram of an exemplary computer system 500 for implementing embodiments consistent with the present disclosure. In an embodiment, the computer system 500 may be used to implement the driver assistance system 103. The computer system 500 may include a central processing unit ("CPU" or "processor") 502. The processor 502 may include at least one data processor for stitching frames to assist driver of a vehicle. The processor 502 may include specialized processing units such as, integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 500 consists of a driver assistance system 103. The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 509 may include, without limitation, a direct interconnection, local area network (LAN), wide area network (WAN), wireless network (e.g., using Wireless Application Protocol), the Internet, etc. Using the network interface 503 and the communication network 509, the computer system 500 may communicate with a vehicle 514. The network interface 503 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 509 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 502 may be disposed in communication with a memory 505 (e.g., RAM, ROM, etc. not shown in figure 5) via a storage interface 504. The storage interface 504 may connect to memory 505 including, without limitation, memory drives, removable disc drives, etc., employing connection protocols such as, serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database components, including, without limitation, user interface 506, an operating system 507 etc. In some embodiments, computer system 500 may store user/application data 506, such as, the data, variables, records, etc., as described in this disclosure. Such databases may be implemented as fault-tolerant, relational, scalable, secure databases such as Oracle® or Sybase®.

The operating system 507 may facilitate resource management and operation of the computer system 700. Examples of operating systems include, without limitation, APPLE MACINTOSH$^R$ OS X, UNIX$^R$, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE$^R$ IOS™, GOOGLE$^R$ ANDROID™, BLACKBERRY$^R$ OS, or the like.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

The present disclosure discloses an image stitching technique which provides a parallax tolerance free image.

An embodiment of the present disclosure helps in visualizing a wider rear view of moving vehicle and hence helps driver of the vehicle in decision making.

An embodiment of the present disclosure may be used for stitching images from cameras mounted on stationary or non-stationary structures with allowing relative movement between the cameras.

An embodiment of the present disclosure eliminates the need for relative calibration between cameras.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media include all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as, an optical fiber, copper wire, etc. The transmission signals in which the code or logic is encoded may further include a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" includes non-transitory computer readable medium, hardware logic, and/or transmission signals in which code may be implemented. A device in which the code implementing the described embodiments of operations is encoded may include a computer readable medium or hardware logic. Of course, those skilled in the art will recognize that many modifications may be made to this configuration without departing from the scope of the invention, and that the article of manufacture may include e suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figures 3** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the scope being defined by the appended claims.

## Claims

1. A method of stitching frames to assist driver of a vehicle, the method comprising:

   receiving, by a driver assistance system (103), a plurality of frames from a plurality of image sensors (111) configured in a vehicle (101);

   identifying, by the driver assistance system (103), one or more objects and corresponding pixel coordinates in the plurality of frames;

   determining, by the driver assistance system (103), one or more sets of mapped objects based on correspondence between the one or more objects, in each of the plurality of frames, wherein the correspondence is determined based on the pixel coordinates of the one or more objects;

   determining, by the driver assistance system (103), a visibility status for each object in each set of the mapped objects, based on pre-defined visibility conditions;

   identifying, by the driver assistance system (103), a priority index for each object in each set of the mapped objects, based on the visibility status and corresponding object parameters, wherein the object parameters comprise object size, relative object ratio, object type and proximity of the one or more objects to the plurality of image sensors (111); and

   generating, by the driver assistance system (103), a resultant image by stitching the plurality of frames, considering an object from each set of the mapped objects having the highest priority index such that it overlaps lower priority objects, wherein the resultant image is displayed to assist the driver of the vehicle (101).

2. The method as claimed in claim 1, wherein the plurality of frames is captured with a pre-defined overlapping value and at a pre-defined rate from each of the plurality of image sensors (111).

3. The method as claimed in claim 1 or claim 2, wherein the one or more objects are identified based on a pre-trained object recognition classifier.

4. The method as claimed in any of the preceding claims, wherein the visibility status for each object in each set of the mapped objects comprises a relative object position of each object in one frame of the plurality of frames with respect to another frame of the plurality of frames.

5. The method as claimed in any of the preceding claims, wherein the pre-defined visibility conditions comprises at least one of presence, partial presence and absence of the one or more objects.

6. The method as claimed in claim 1, wherein the object size and the relative object ratio are determined based on the pixel coordinates of the corresponding object.

7. The method as claimed in any of the preceding claims, further comprising eliminating discontinuity in the plurality of stitched frames using an image smoothening filter.

8. A driver assistance system (101) for stitching frames to assist driver of a vehicle (101), comprising:

   a processor (109); and
   a memory (107) communicatively coupled to the processor (109), wherein the memory (107) stores processor instructions, which, on execution, causes the driver assistance system (101) to perform the method of any of the preceding claims.

9. A computer readable medium including instruction stored thereon that when processed by at least one processor (109) cause a driver assistance system (103) to perform the method of any of claims 1 to 7.

10. A computer program product comprising instructions that, when executed by a computer, cause the computer to perform the method of any of claims 1 to 7.

## Patentansprüche

1. Verfahren zum Zusammenfügen von Einzelbildern, um dem Fahrer eines Fahrzeugs zu assistieren, wobei das Verfahren umfasst:

   ein Empfangen mehrerer Einzelbilder von mehreren in einem Fahrzeug (101) konfigurierten Bildsensoren (111) durch ein Fahrerassistenzsystem (103);
   ein Identifizieren eines oder mehrerer Obj ekte und entsprechender Pixelkoordinaten in den mehreren Einzelbildern durch das Fahrerassistenzsystem (103);
   ein Bestimmen eines oder mehrerer Sätze von abgebildeten Objekten durch das Fahrerassistenzsystem (103) auf Grundlage einer Übereinstimmung zwischen dem einen oder den mehreren Objekten in jedem der mehreren Einzelbildern, wobei die Übereinstimmung auf Grundlage der Pixelkoordinaten des einen oder der mehreren Objekte bestimmt wird;
   ein Bestimmen auf Grundlage vordefinierter Sichtbarkeitsbedingungen eines Sichtbarkeitsstatus für jedes Objekt in jedem Satz der abgebildeten Objekte durch das Fahrerassistenzsystem (103);
   ein Identifizieren eines Prioritätsindex für jedes Objekt in jedem Satz der abgebildeten Objekte auf Grundlage des Sichtbarkeitsstatus und entsprechender Objektparameter durch das Fahrerassistenzsystem (103), wobei die Objektparameter eine Objektgröße, ein relatives Objektverhältnis, eine Objektart und eine Nähe des einen oder der mehreren Objekte zu den mehreren Bildsensoren (111) umfassen; und
   ein Erzeugen eines resultierenden Bildes durch das Fahrerassistenzsystem (103) durch das Zusammenfügen der mehreren Einzelbilder unter Berücksichtigung eines Objekts aus jedem Satz der abgebildeten Objekte mit dem Index mit der höchsten Priorität, sodass es Objekte mit niedrigerer Priorität überlappt, wobei das resultierende Bild angezeigt wird, um dem Fahrer des Fahrzeugs (101) zu assistieren.

2. Verfahren nach Anspruch 1, wobei die mehreren Einzelbilder mit einem vordefinierten Überlappungswert und mit einer vordefinierten Rate von jedem der mehreren Bildsensoren (111) aufgenommen werden.

3. Verfahren nach Anspruch 1 oder Anspruch 2, wobei das eine oder die mehreren Objekte auf Grundlage eines vortrainierten Objekterkennungsklassifizierers identifiziert werden.

4. Verfahren nach einem der vorhergehenden Ansprüche, wobei der Sichtbarkeitsstatus für jedes Objekt in jedem Satz der abgebildeten Objekte eine relative Objektposition jedes Objekts in einem Einzelbild der mehreren Einzelbilder in Bezug auf ein anderes Einzelbild der mehreren Einzelbilder umfasst.

5. Verfahren nach einem der vorhergehenden Ansprüche, wobei die vordefinierten Sichtbarkeitsbedingungen ein Vorhandensein, ein teilweises Vorhandensein und/oder ein Fehlen des einen oder der mehreren Objekte umfassen.

6. Verfahren nach Anspruch 1, wobei die Objektgröße und das relative Objektverhältnis auf Grundlage der Pixelkoordinaten des entsprechenden Objekts bestimmt werden.

7. Verfahren nach einem der vorhergehenden Ansprüche, das ferner ein Beseitigen einer Diskontinuität in den mehreren zusammengefügten Einzelbildern unter Verwendung eines Bildglättungsfilters umfasst.

8. Fahrerassistenzsystem (101) zum Zusammenfügen von Einzelbildern, um dem Fahrer eines Fahrzeugs (101) zu assistieren, umfassend:

   einen Prozessor (109);
   und einen Speicher (107), der kommunikativ mit dem Prozessor (109) verbunden ist, wobei der Speicher (107) Prozessoranweisungen speichert, die bei Ausführung das Fahrerassistenzsystem (101) veranlassen, das Verfahren nach einem der vorhergehenden Ansprüche durchzuführen.

9. Nichtflüchtiges computerlesbares Medium, einschließlich darauf gespeicherter Anweisungen, die, wenn sie von wenigstens einem Prozessor (109) verarbeitet werden, das Fahrerassistenzsystem (103) veranlassen, das Verfahren nach einem der Ansprüche 1 bis 7 durchzuführen.

10. Computerprogrammprodukt, das Anweisungen umfasst, die, wenn sie von einem Computer ausgeführt werden, den Computer veranlassen, das Verfahren nach einem der Ansprüche 1 bis 7 durchzuführen.


**Revendications**

1. Méthode d'assemblage de trames pour assister le conducteur d'un véhicule, la méthode comprenant :

   la réception, par un système d'assistance au conducteur (103), d'une pluralité de trames d'une pluralité de capteurs d'images (111) configurés dans un véhicule (101) ;
   l'identification, par le système d'assistance au conducteur (103), d'un ou plusieurs objets et coordonnées de pixel correspondantes dans la pluralité de trames ;
   la détermination, par le système d'assistance au conducteur (103), d'un ou plusieurs jeux d'objets mappés sur la base d'une correspondance entre l'un ou plusieurs objets dans chacune de la pluralité de trames, la correspondance étant déterminée sur la base des coordonnées de pixel de l'un ou plusieurs objets ;
   la détermination, par le système d'assistance au conducteur (103), d'un état de visibilité pour chaque objet dans chaque jeu d'objets mappés, sur la base de conditions de visibilité prédéfinies ;
   l'identification, par le système d'assistance au conducteur (103), d'un indice de priorité pour chaque objet dans chaque jeu des objets mappés, sur la base de l'état de visibilité et de paramètres d'objet correspondants, les paramètres d'objet comprenant la taille de l'objet, le ratio relatif d'objets, le type d'objet, et la proximité de l'un ou plusieurs objets à la pluralité de capteurs d'images (111) ; et
   la génération, par le système d'assistance au conducteur (103), d'une image résultante par l'assemblage de la pluralité de trames, en tenant compte d'un objet de chaque jeu d'objets mappés présentant l'indice de priorité le plus élevé, de sorte qu'il chevauche des objets à priorité inférieure, l'image résultante étant affichée pour assister le conducteur du véhicule (101).

2. Méthode selon la revendication 1, la pluralité de trames étant capturée avec une valeur de recouvrement prédéfinie et un taux prédéfini de chacun de la pluralité de capteurs d'image (111).

3. Méthode selon la revendication 1 ou la revendication 2, l'un ou plusieurs objets étant identifiés sur la base d'un classificateur de reconnaissance d'objet préformé.

4. Méthode selon une quelconque des revendications précédentes, l'état de visibilité pour chaque objet de chaque jeu d'objets mappés comprenant une position d'objet relative de chaque objet dans une trame de la pluralité de trames relativement à une autre trame de la pluralité de trames.

5. Méthode selon une quelconque des revendications précédentes, l'état de visibilité prédéfini comprenant au moins une d'une présence, d'une présence partielle, ou d'une absence de l'un ou plusieurs objets.

6. Méthode selon la revendication 1, la taille de l'objet et le ratio relatif d'objets étant déterminés sur la base des coordonnées de pixel de l'objet correspondant.

7. Méthode selon une quelconque des revendications précédentes, comprenant en outre l'élimination de la discontinuité dans la pluralité de trames assemblées avec l'utilisation d'un filtre de lissage d'image.

8. Système d'assistance au conducteur (101) pour l'assemblage de trames pour assister le conducteur d'un véhicule (101), comprenant :

   un processeur (109) ; et
   une mémoire (107) couplée en communication au processeur (109), la mémoire (107) stockant des instructions du processeur, qui, lors de leur exécution, entraînent l'exécution, par le système d'assistance au conducteur (101), de la méthode d'une quelconque des revendications précédentes.

9. Support lisible par ordinateur comprenant une instruction stockée dans celui-ci, qui, lors de son exécution par au moins un processeur (109), donne lieu à l'exécution, par un système d'assistance au conducteur (103), de la méthode selon une quelconque des revendications 1 à 7.

10. Progiciel comprenant des instructions, qui, lors de leur exécution par un ordinateur, donnent lieu à l'exécution, par l'ordinateur, à la méthode selon une quelconque des revendications 1 à 7.

100

VEHICLE **101**

DRIVER ASSISTANCE SYSTEM **103**

I/O INTERFACE **105**

MEMORY **107**

PROCESSOR **109**

IMAGE SENSORS **111₁**

IMAGE SENSORS **111₂**

o
o

IMAGE SENSORS **111ₙ**

**Fig.1**

DRIVER ASSISTANCE SYSTEM **101**

| I/O INTERFACE **105** | PROCESSOR **109** |

MEMORY **107**

DATA **200**

| FRAME DATA **201** | OBJECT DATA **203** | PRIORITY INDEX DATA **205** |

| RESULTANT IMAGE DATA **207** | OTHER DATA **209** |

MODULES **211**

| RECEIVING MODULE **213** | OBJECT IDENTIFICATION MODULE **215** | MAPPED OBJECT DETERMINATION MODULE **217** |

| VISIBILITY STATUS DETERMINATION MODULE **219** | PRIORITY INDEX IDENTIFICATION MODULE **221** | RESULTANT IMAGE GENERATION MODULE **223** |

| OTHER MODULES **225** |

**Fig.2**

300

RECEIVE PLURALITY OF FRAMES FROM PLURALITY OF IMAGE SENSORS CONFIGURED IN VEHICLE
**301**

IDENTIFY ONE OR MORE OBJECTS AND CORRESPONDING PIXEL COORDINATES IN PLURALITY OF FRAMES
**303**

DETERMINE ONE OR MORE SET OF MAPPED OBJECTS BASED ON CORRESPONDENCE BETWEEN ONE OR MORE OBJECTS, IN EACH OF PLURALITY OF FRAMES, WHERE CORRESPONDENCE IS DETERMINED BASED ON PIXEL COORDINATES OF ONE OR MORE OBJECTS
**305**

DETERMINE VISIBILITY STATUS FOR EACH OBJECT IN EACH SET OF MAPPED OBJECTS, BASED ON PRE-DEFINED VISIBILITY CONDITIONS
**307**

IDENTIFY PRIORITY INDEX FOR EACH OBJECT IN EACH SET OF MAPPED OBJECTS, BASED ON VISIBILITY STATUS AND CORRESPONDING OBJECT PARAMETERS
**309**

GENERATE RESULTANT IMAGE BY STITCHING PLURALITY OF FRAMES, CONSIDERING OBJECT FROM EACH SET OF MAPPED OBJECTS HAVING HIGHEST PRIORITY INDEX, WHERE RESULTANT IMAGE IS DISPLAYED TO ASSIST DRIVER OF VEHICLE
**311**

**Fig.3**

DISPLAY UNIT **405**

MENU

MAP

AUDIO

VOL

PUSH

PHONE  AUDIO  MENU  NAV  SETTING

BACK

PUSH
SOUND

**Fig.4a**

**Fig.4b**

**Fig.4c**

**Fig.4d**

INPUT DEVICES **512**

OUTPUT DEVICES **513**

I/O INTERFACE **501**

PROCESSOR **502**

NETWORK INTERFACE **503**

COMMUNICATION NETWORK **509**

VEHICLE **514**

STORAGE INTERFACE **504**

MEMORY **505**

USER INTERFACE **506**

OPERATING SYSTEM **507**

WEB BROWSER **508**

COMPUTER SYSTEM **500**

**Fig.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017178372 A1

**Non-patent literature cited in the description**

- **RICHARD SZELISKI.** Image Alignment and Stitching: A Tutorial. *FOUNDATIONS AND TRENDS IN COMPUTER GRAPHICS AND VISION,* 01 January 2006, vol. 2 (1), 1